# EUROPEAN PATENT APPLICATION

(11) **EP 4 321 339 A1**
(43) Date of publication of application: **14.02.2024**
(21) Application number: 22190258.8
(22) Date of filing: 12.08.2022
(51) Int. Cl.: B33Y 10/00, B33Y 80/00, F16F 9/30

(54) **METHOD FOR MANUFACTURING A DAMPING DEVICE, FOR DAMPING VIBRATIONS AND/OR ABSORBING SHOCKS**

(71) Applicant: CSEM Centre Suisse d'Electronique et de Microtechnique SA - Recherche et Développement, 2002 Neuchâtel (CH)
(72) Inventor: SAUDAN, Hervé, 1720 Corminboeuf (CH); COSANDIER, Florent, 2300 La Chaux-de-Fonds (CH)
(74) Representative: e-Patent SA

(57) **Abstract**

A method of manufacturing a damping device, for damping vibrations and/or absorbing shocks, and the corresponding device are disclosed, the method comprising the steps of:
S1) Implementing an Additive Manufacturing step to produce a monolithic structure comprising a first flexible element (1) and at least a second flexible element (2) extending parallel to the first flexible element (1), wherein at least the first flexible element (1) comprises through-going apertures (6),
S2) Providing a material, in the region between the first flexible element (1) and the at least second flexible element (2), which is able to change of physical and/or chemical state to turn into a viscoelastic material when it is submitted to a suitable predefined treatment, and
S3) Applying the suitable predefined treatment to the material to conform a dissipative layer (3) of viscoelastic material, extending between the first flexible element (1) and the at least second flexible element (2) and secured to both of them, wherein the through-going apertures (6) are at least partially filled by said viscoelastic material.

## Description

### Technical Field

The invention is in the field of shock absorbing and vibration damping devices. In particular, the invention concerns a method for manufacturing a flexible mechanism comprising a dissipative element.

The invention also relates to a damping device manufactured by the above method and usable to damp vibrations and/or absorb shocks.

### State of the art

Flexural joints can be implemented as mechanical interfaces providing shock protection and vibration isolation to sensitive structures. Often, such interfaces are purely elastic, only designed to convert the kinetic energy of a shock into elastic energy of a flexible element, preventing a shock wave from reaching the sensitive parts causing damage. The elastic energy is afterwards released in the form of vibrations and is slowly dissipated throughout the whole mechanical structure of the device.

A more convenient approach disclosed in patent EP 3076245 B1, proposes to integrate directly in a flexure mechanism an energy dissipation function, in particular in a watch, for instance for connecting moving components to the watch movement or even to connect the watch movement to the watch case. This is accomplished by the provision of a dissipative layer attached to a flexible elastic element. The flexion of the elastic element causes a shearing deformation of the attached dissipative layer such that the mechanical energy of a shock or vibration is effectively dissipated as thermal energy at the flexure mechanism.

As mentioned in EP 3076245 B1, good adhesion of the dissipative layer to the flexible elastic element is necessary for the implementation of this solution.

Generally, the manufacturing method disclosed in EP 3076245 B1 comprises distributing by capillarity a liquid polymerizable material between two parallel flexible blades, and curing in a second step the polymer, to provide a shear dissipative layer between the flexible blades.

While this method can certainly provide the necessary adhesion between the dissipative and flexible layers in a small-sized mechanism such as a watch component, its implementation at larger scales faces practical problems. It does not guarantee optimal adherence or a complete propagation of the liquid polymerizable material between the two adjacent blades. Hence, the performance of the damping device is not guaranteed.

Furthermore, the devices manufactured with this prior method are suitable for damping applications but not really for guiding flexure applications, especially when a great amplitude of movement is likely to happen.

Accordingly, it appears that there is still some room for improving the known methods, by providing an efficient solution to secure a dissipative layer to flexible elements to conform a shock absorbing and/or vibration damping device whatever its scale.

### Disclosure of the invention

An aim of the present invention is to propose a method of manufacturing a shock absorbing and/or vibration damping device comprising a dissipative layer secured to at least two flexible elements, with an improved adhesion between the dissipative layer and the flexible elements.

It is another aim of the present invention to propose the manufacture of such a device with an improved energy dissipation rate, by maximizing the shear stress of the dissipative layer upon deformation of the flexible elements.

These aims are achieved by providing a method of manufacturing a damping device, for damping vibrations and/or absorbing shocks, comprising the steps of:
S1) Implementing an Additive Manufacturing step to produce a monolithic structure comprising a first flexible element essentially having a sheet or blade-like geometry and at least a second flexible element essentially having a sheet or blade-like geometry and extending substantially parallel to the first flexible element, wherein at least the first flexible element comprises at least one through-going aperture, preferably a plurality of through-going apertures,
S2) Providing a material, in the region between the first flexible element and the at least second flexible element, which is able to change of physical and/or chemical state to turn into a viscoelastic material when it is submitted to a suitable predefined treatment, and
S3) Applying the suitable predefined treatment to the material to conform a dissipative layer of viscoelastic material, extending between the first flexible element and the at least second flexible element and secured to both of them, wherein the through-going aperture or at least one of the plurality of through-going apertures is at least partially filled by the viscoelastic material.

The implementation of an Additive Manufacturing operation provides a great flexibility for building a monolithic structure including at least two flexible elements, at least one of which comprises at least one through-going aperture. Thanks to this feature, through-going apertures can be provided anywhere on the flexible element as a function of its shape and size, to ensure a complete propagation of the viscoelastic material. Furthermore, the penetration of the dissipative layer into the through-going apertures provided in the flexible element(s), drastically increases the adhesion between the dissipative layer and the flexible elements. Whereas this advantage is already effective by providing at least one through-going aperture in only one of the flexible elements, preferably a plurality of through-going apertures eventually arranged in an array, it is more advantageous to provide through-going apertures in each of the flexible elements.

The flexible elements comprised in the shock absorbing and/or vibration damping device of the invention, are described as essentially having a "sheet or blade-like geometry". This must be understood as a shape presenting a main surface, and a thickness which is significantly smaller than the characteristic size of said main surface. Such type of geometry is well known by the skilled person in the field of flexure guiding mechanisms. The surface of such flexible elements need not be planar but may present a predetermined curve.

Besides not being necessarily planar, the "sheet or blade-like geometry" of the flexible elements according to the invention need not be flat either. Indeed, the main surface of the flexible elements may present protrusions or be irregular in general. The thickness of a given flexible element may also vary across its geometry. The person skilled in the art will still recognize its shape as being "sheet or blade-like" in the sense of the present disclosure, as long as the thickness of the element remains significantly smaller than its other characteristic dimensions. For example, the maximal thickness of the flexible element should be smaller than the other dimensions by at least a factor of 10. Generally, two flexible elements of the monolithic structure do not need to have the same thickness. In specific embodiments, it might be advantageous to provide a master flexible element with a greater thickness than the other, slave, flexible element. For instance, the thickness of the slave flexible element might be comprised between 10% and 99% of the thickness of the master flexible element.

According to a preferred embodiment of the method according to the invention, it might be provided that the Additive Manufacturing step (S1) includes an operation consisting in providing at least one sacrificial bridge between the first flexible element and the at least second flexible element, and that the method includes an additional step implemented after the step S3 and including an operation consisting in removing the at least one sacrificial bridge.

Such sacrificial bridges ensure that the flexible elements do not change of shape during the whole implementation of the manufacturing method, either during heating phases occurring with the Additive Manufacturing operation (S1) or possibly with the suitable predefined treatment (S3), or while the material to be treated is applied between them during implementation of step S2. It should be noted that the Additive Manufacturing operation typically takes place on a build or base plate on which the monolithic structure is grown up. Hence, the build plate as such may also fulfil the stabilization function of sacrificial bridges, also during implementation of steps S2 and S3, and no specific additional sacrificial bridge might be needed, depending on the geometry of the monolithic structure and on the general operating conditions of the manufacturing method. In this case, it can be provided that when the build plate is removed, after the dissipative layer is completed, the flexible elements are no more connected to each other but through the dissipative layer.

According to another preferred embodiment of the method according to the invention, it might be provided that the Additive Manufacturing step is implemented so as to provide the at least second flexible element with at least one protrusion extending in the direction to the first flexible element.

According to another preferred embodiment of the method according to the invention, it might be provided that the Additive Manufacturing step is implemented so as to provide the at least second flexible element with at least one through-going aperture, preferably with a plurality of through-going apertures, and that the steps S2 and S3 are implemented in such a way that the at least one through-going aperture is at least partially filled with the viscoelastic material of the dissipative layer.

Generally, the through-going apertures might have basic geometries, for instance rounded or polygonal, but it is also possible to provide that at least one or several of them include protrusions extending internally from their side, substantially in the (local) plane of the corresponding flexible element. This feature leads to a more complex geometry of the through-going apertures improving the adherence of the viscoelastic material to the corresponding flexible element.

Generally, according to another preferred embodiment of the method according to the invention, when defining that the first flexible element comprises an internal surface, facing an internal surface of the at least second flexible element, and an external surface opposite the internal surface, it might be provided that the said steps S2 and S3 are implemented in such a way that the dissipative layer extends beyond the through-going aperture or at least one of the plurality of through-going apertures so as to cover at least partially the external surface of the first flexible element.

According to another preferred embodiment of the method according to the invention, it might be provided that the Additive Manufacturing step (S1) is implemented so as to provide the monolithic structure with at least one additional flexible layer having a sheet or blade-like geometry, extending substantially parallel to the first and second flexible elements, so as to form a sandwich structure defined by two external flexible elements and at least one internal flexible element, the latter being provided with at least one through-going aperture, wherein the region between all the flexible elements of the monolithic structure is filled by the viscoelastic material of the dissipative layer, including the at least one through-going aperture.

According to another preferred embodiment of the method according to the invention, it might be provided that the Additive Manufacturing step (S1) is implemented so as to provide the monolithic structure with a permanent rigid connection between first extremities of the first flexible element and of the at least second flexible element. In this case, it might be further provided that the Additive Manufacturing step (S1) is implemented so as to provide the monolithic structure with a permanent rigid connection between the other extremities of the first flexible element and of the at least second flexible element.

Generally, according to another preferred embodiment of the method according to the invention, it might be provided that the Additive Manufacturing step (S1) includes an operation chosen from the group comprising: Laser Powder Bed Fusion (LPBF, including Binder Jetting), Electron Beam Melting (EBM), Direct Energy Deposition (DED), Fused Deposition Melting (FDM) or liquid based processes such as Stereolithography (SLA) or Polyjet.

According to another preferred embodiment of the method according to the invention, it might be provided that the viscoelastic material is a polymer, and that the step S3 includes a curing operation chosen from the group comprising: applying UV radiation, applying heat, orwaiting the necessary time to complete a polymerization or vulcanization reaction.

According to another preferred embodiment of the method according to the invention, it might be provided that the Additive Manufacturing step (S1) includes an operation consisting in providing the monolithic structure with a mechanical mounting organ.

Examples of suitable materials for the flexible elements include metals, bulk metallic glasses, ceramics, polymers, or crystalline materials such as silicone.

Some examples of preferred materials are: high performance stainless steels (for instance 17-4PH, 316L), titanium (for instance Grade 5, Grade 2), aluminium (for instance Scallmalloy and equivalent high performance alloys) or zero-CTE alloys (for instance Invar 36).

A "flexible element", as generally understood by the skilled person, has the ability to deform elastically and return to its original shape when the applied stress is removed. The elastic constant of the flexible elements of the invention is determined by the material properties as well as their geometry and will depend on the specific embodiment. Whereas every material is to a certain point elastic, it must be understood that the flexible elements having sheet or blade-like geometry according to the present invention, should be able to undergo a deformation, wherein one extremity of the flexible element can be deflected from its equilibrium position, at least by an amount equal to its characteristic thickness without exceeding its elastic limit.

Examples of suitable materials for the dissipative layer are viscoelastic materials, typically polymers and rubbers, comprising for example: polyurethanes, cis-1,4-polyisoprene (NR), synthetic polyisoprene (IR), polybutadiene (BR), styrene-butadiene copolymer (SBR), polyisoprenes, polyisobutylenes, butadiene-acrylonitrile copolymers, ethylene-propylene copolymers, ethylene-propylene-diene terpolymers, polyether block amide (PEBA), elastomeric polyolefins such as polyisobutylene (PIB), ethylene-propylene (EPR or EPM) and ethylene-propylene-diene-monomer (EPDM), ethylene-vinyl acetate copolymer (EVA or EVM), ethylene acrylic copolymer (AEM), polyacrylic elastomers (ACM), epichlorohydrin elastomers (CO and ECO), or a combination of the latter, sorbothane, FKM (vinylidene fluoride based rubber), silicone gels, or UV-crosslinkable urethane acrylates.

Preferably, the viscoelastic material of the dissipative layer is made from one or several materials chosen in the group comprising: soft silicone gels (for instance a gel), polyurethane acrylates, or synthetic rubbers (for instance hepichlorohydrin).

In general, the damping properties of suitable materials for the dissipative layer of the present invention, will be characterized by a "tan delta" value of the dissipative layer equal or higher than 0.1.

It is another aim of the present invention to provide a damping device, for damping vibrations and/or absorbing shocks, manufactured through the implementation of a manufacturing method according to the above-mentioned features either alone or in any meaningful combination.

Generally, the damping device according to the present invention comprises a monolithic structure including a first flexible element having essentially a sheet or blade-like geometry, at least a second flexible element having essentially a sheet or blade-like geometry and extending substantially parallel to the first flexible element, a dissipative layer comprising a viscoelastic material, extending between the flexible elements and secured to both of them, wherein the first flexible element comprises at least one through-going aperture, preferably a plurality of through-going apertures, and wherein the at least one through-going aperture or at least one of the plurality of through-going apertures is at least partially filled by the viscoelastic material of the dissipative layer.

Other specific preferred features of the damping device according to the invention, directly deriving from the preferred features of the manufacturing method according to the invention, are mentioned in the dependent claims.

Subsidiarily, the damping device according to the invention may fulfil a flexure guiding function when it is integrated within a flexure guiding mechanism. For example, the flexible elements may be part of a flex-pivot, a translation table or other compliant mechanisms as known by the person skilled in the field of flexure mechanisms. The advantage of integrating a damping device according to the invention in such flexure guiding mechanisms is to enable a rapid dissipation of shocks or vibration energy in the mechanism.

More generally, it might be advantageous to provide a flexure guiding mechanism including a damping device, for damping vibrations and/or absorbing shocks, the damping device being manufactured by an alternative manufacturing method and comprising a first flexible element having essentially a sheet or blade-like geometry, at least a second flexible element having essentially a sheet or blade-like geometry and extending substantially parallel to the first flexible element, a dissipative layer comprising a viscoelastic material, extending between the flexible elements and secured to both of them,
wherein the first flexible element comprises at least one through-going aperture, preferably a plurality of through-going apertures,
wherein the at least one through-going aperture or at least one of the plurality of through-going apertures is at least partially filled by said viscoelastic material of said dissipative layer, and
wherein the damping device is arranged to fulfil a flexure guiding function. To the best of our knowledge, such device has never been disclosed in the prior art.

On a general basis, the damping device according to the present invention can be used in many different technical fields, such as spatial, automotive, railway, robotic, metrology or medical (prosthesis, orthosis) fields, and can thus be manufactured with a length of its flexible elements preferably being equal or greater than 15 mm.

### Brief description of the drawings

Further details of the invention will appear more clearly upon reading the description below, in connection with the following figures which illustrate:
- Fig. 1: Exemplary embodiment of a shock absorbing and/or vibration damping device according to the invention,
- Fig. 2: Examples of mechanisms comprising shock absorbing and/or vibration damping devices according to the invention (lateral view),
- Fig. 3: Examples of curved sheet or blade-like geometries which can be implemented in a flexible element according to one aspect of the invention,
- Fig. 4: Examples of flexible elements having a sheet or blade-like geometry comprising an array of through-going apertures, according to another aspect of the invention,
- Fig. 5: Example of one mechanism comprising a shock absorbing and/or vibration damping device according to the invention,
- Fig. 6: Detail of another example of a mechanism comprising a shock absorbing and/or vibration damping device according to the invention, before removing sacrificial bridges of the monolithic structure,
- Fig. 7: Examplary embodiment of another shock absorbing and/or vibration damping device according to the invention,
- Fig. 8: Experimental data showing the effect of the dissipative layer in the damping of the oscillations of the exemplary device referred to in Fig. 5., and
- Fig. 9: Main steps of a preferred method of fabrication of a shock absorbing and/or vibration damping device according to the invention.

### Embodiments of the invention

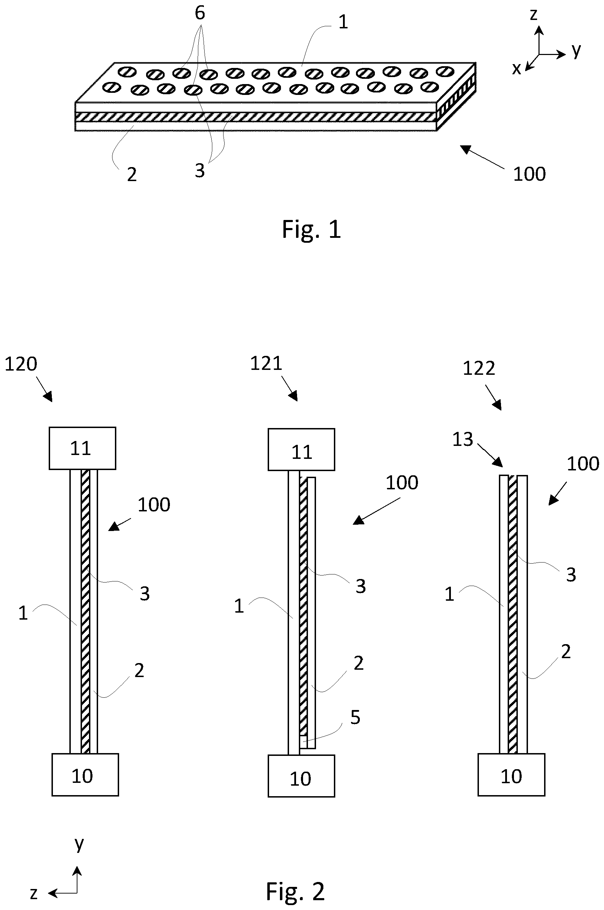

Fig. 1 shows an example of a shock absorbing and/or vibration damping device according to the invention. The device 100 comprises a first flexible element 1, a second flexible element 2 and a dissipative layer 3 extending within the space separating the two flexible elements 1, 2. In this example, the flexible elements present a planar geometry in the form of flat blades, characterized by a thickness (z-direction) significantly smaller than the lateral (x, y) dimensions. Such geometry allows an elastic deformation of the flexible elements 1, 2 under the effect of a stress applied in the z direction.

As already mentioned, the flexible elements 1, 2 can have a same thickness or, alternatively, a thicker flexible element can play the role of a master blade, while the other one plays the role of a slave blade, with a thickness comprised between 10% and 99% of the thickness of the master blade.

Generally, it may be provided that the thickness of the gap between the two flexible elements 1, 2 is comprised between 0.1 and 5 times the sum of the thicknesses of the two flexible elements 1, 2. When there are more than two flexible elements, it may be provided that the above-mentioned range applies to each of the corresponding gaps.

According to one aspect of the invention, in the example of Fig. 1 the first flexible element 1 presents an array of through-going apertures 6 in the form of through-holes distributed across its surface. The material conforming the dissipative layer 3, extends into the through-going apertures 6, filling them partially, or totally like in the example of Fig. 1.

In some embodiments, the material conforming the dissipative layer 3 may extend beyond the apertures and cover partially or totally the external surface of the flexible element 1 (not shown in Fig. 1). This advantageously improves the adhesion of the dissipative layer to the flexible element.

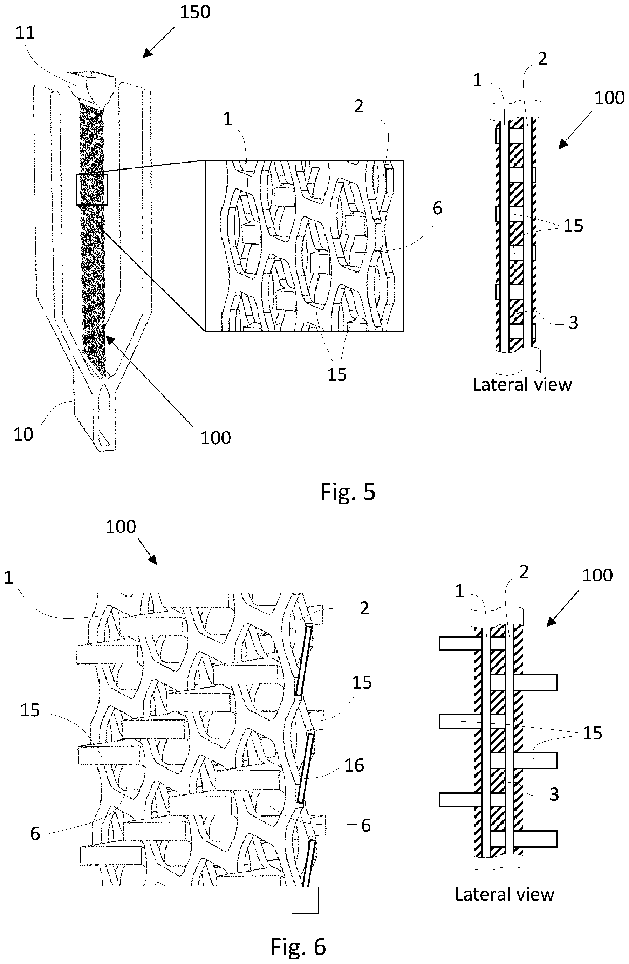

Not visible in Fig. 1, but later shown in Figs. 5 and 6, the second flexible element 2, may advantageously be also provided with an array of through-going apertures filled by the material conforming the dissipative layer 3. The apertures of the two flexible elements 1, 2 can be aligned or not.

Several schematic examples of mechanisms 120, 121, 122 comprising a shock absorbing and/or vibration damping device 100 according to the invention are presented in Fig. 2 (lateral view).

The specific nature of the mechanisms is not relevant to describe the different embodiments of Fig. 2. A generic element 10 is represented, which may correspond to a mechanical mounting organ to which the shock absorbing and/or vibration damping device 100 is attached. Any attachment means such as glue, soldering or screws can be validly considered. Advantageously, the flexible elements 1, 2 of the shock absorbing and/or vibration damping device 100 may be monolithically constructed with a part of the mechanical mounting organ 10.

In the first two examples of mechanisms 120, 121 of Fig. 2, the shock absorbing and/or vibration damping device 100 is linked to a second generic element 11, which may correspond to another mechanical organ or represent any sensitive part of a complex system, which requires mechanical protection from vibrations or shocks. Again, any attachment means such as glue, soldering or screws can be validly considered. Advantageously, the flexible elements 1, 2 of the shock absorbing and/or vibration damping device 100 may be monolithically constructed with a part of the mechanical mount of the second generic organ 11.

As shown in the second example mechanism 121 of Fig. 2, in order to provide a mechanical coupling between the shock absorbing and/or vibration damping device 100 and the generic elements 10, 11, it is not necessary that each of the flexible elements 1, 2, is directly attached or monolithically constructed with the generic elements 10, 11. It may be enough to provide one such coupling, for example, with the first flexible element 1 as in the second example mechanism 121 of Fig. 2.

A direct solid link 5 may be provided between the two flexible elements 1, 2 of the shock absorbing and/or vibration damping device 100, as represented in the second example mechanism 121 of Fig. 2. De facto, such solid link is also provided by attaching both flexible elements 1, 2 to a mounting organ 10, 11, as in the first and third example mechanisms 120, 122 of Fig. 2. Having at least a solid link between the first and second flexible elements 1, 2 of the shock absorbing and/or vibration damping device 100 is advantageous in terms of the mechanical robustness of the device.

In the third exemplary embodiment of Fig. 2, the mechanism 122 comprises a shock absorbing and/or vibration damping device 100, which is only attached to one generic element 10 and has a free end 13 which can freely oscillate as a result of a vibration or shock.

Indeed, the shock absorbing and/or vibration damping device 100 of the invention is not necessarily implemented as a damping link between two parts of a mechanical system. It can be simply attached or constructed as a free standing appendix of an organ 10, capable of dissipating the mechanical energy of vibrations applied to, or produced by such an organ 10. A numerical analysis of the vibrational modes of the shock absorbing and/or vibration damping device 100 would allow the person skilled in the art to optimize the sizes and materials of the damping device 100, adapted to specific vibration frequencies, for example of a rotating motor.

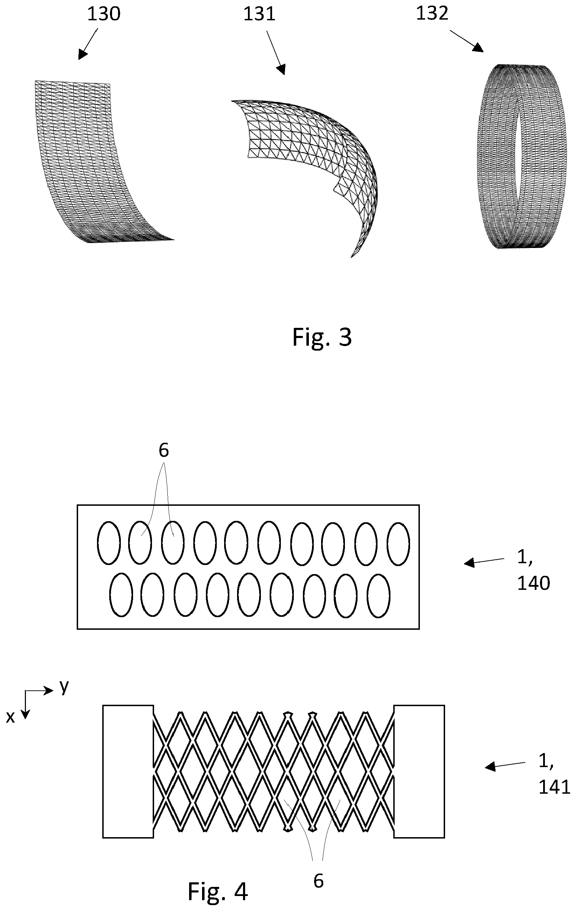

Some examples of curved surfaces which may be used to implement the flexible elements of the device of the invention are presented in Fig. 3. These may be curved along a single direction, for example, as a section of cylindric wall 130, or may be curved along several directions, for example as a section of a toroidal surface 131. Additionally, the curved surface may define a closed shape, like a ring 132. This type of geometry may be advantageous to implement in a shock absorber mechanism.

Fig. 4 illustrates several examples 140, 141, of shapes and distribution of the through-going apertures 6 comprised in a flexible element of sheet or blade-like geometry 1 according to one aspect of the invention. For simplicity, the flexible elements 1 are illustrated as planar blades. It is understood that such arrangements of through-going apertures 6 may be also adapted to a curved surface by the skilled person.

In the first example 140 of Fig. 4, the flexible element 1 comprises an array of through holes 6 which are depicted as independent ellipsoids. Other geometric shapes are also possible, e.g. cercles, squares, lozenges, as well as irregular shapes. The through holes 6 may be distributed in a regular array, as illustrated in the two examples of Fig. 4, but may also be randomly distributed across the surface of the flexible element 1.

The through holes 6 may be larger or smaller, and more or less sparse, according to the envisaged application of the shock absorbing and/or vibration damping device 100. In some cases, as illustrated in the second example 141 of Fig. 4, the flexible element 1 may comprise a lattice structure where the through holes 6 represent a larger percent of the surface than the solid parts. Notice that such lattice structure needs not be regular as the one represented in the second example 141.

The percentage of the surface of the flexible element 1 covered by the array of through-going apertures 6, must be adapted by the skilled person such as to obtain
- the necessary robustness and the desired elastic constant of the flexible element 1 and,
- the necessary adhesion of the dissipative layer 3 to the flexible element 1.

In typical embodiments, the through-going apertures 6 may represent between 10% and 80% of the surface of the flexible element 1.

Fig. 5 shows an example of a mechanism 150 comprising a shock absorbing and/or vibration damping device 100 according to one embodiment of the invention, wherein the flexible elements 1, 2 are monolithically constructed, linked on one end with a base organ 10 and, on the opposite end, with a weight organ 11.

A magnified view of the flexible elements 1, 2 is shown at the centre of Fig. 5 in a similar perspective as the whole mechanism 150, whereas a lateral view of a section of the shock absorbing and/or vibration damping device 100 is represented on the right side of the figure.

As can be seen in the magnified view and in the lateral view of Fig. 5, both flexible elements 1, 2 are provided with an array of through-going apertures 6. Moreover, each flexible element 1, 2, is provided with protrusions 15, pointing towards and aligned with the through-going apertures 6 of the other flexible element 2, 1.

The material conforming the dissipative layer 3 fills the space between the two flexible elements 1, 2, passes through the through-going apertures 6 and spreads all over the external surface of the flexible elements 1, 2, embedding the protrusions 15.

The protrusions 15 provide several advantages to this embodiment. On the one hand, they contribute to improve the adherence of the dissipative layer 3 with the flexible elements 1, 2. On the other hand, they locally increase the shear stress of the dissipative layer upon deformation of the flexible elements 1, 2. This results in a more efficient dissipation of the energy of a vibration or shock applied to the device.

In the example of Fig. 5, the flexible elements 1, 2 have a height and width of 47 mm and 18 mm respectively, and a thickness of 0.2 mm corresponding to a sheet or blade-like geometry according to one aspect of the invention. The through-going apertures are regularly spaced and present a near-hexagonal shape (with rounded corners) and a mean diameter of 2.5 mm. The surface of the apertures represents approximately 67% of the total surface of the flexible elements 1, 2. The two flexible elements 1, 2, are spaced by 0.125 mm, and the protrusions extend 0.4 mm from the internal surface of the flexible elements 1, 2 into the corresponding apertures 6 of the other flexible element 2, 1, the through-going apertures and the protrusions being centred with respect to each others.

In general, the protrusions 15 need not necessarily be aligned with the geometric centres of the through-going apertures 6 of the facing flexible element 2, 1. Also, the protrusions need not extend completely through said apertures 6, and the number of protrusions is not necessarily equal to that of the through-going apertures of the facing flexible element.

In other embodiments, the protrusions may extend through the apertures 6 and significantly beyond the facing flexible element, as shown in the example of Fig. 6, which is very similar to the one in Fig. 5, but with longer protrusions 15. In this case, the dissipative layer 3 does not necessarily embed the whole body of the protrusions 15, but at least the part in the space between the two flexible elements.

Sacrificial bridges 16 are schematically represented in Fig. 6, which link the two flexible elements 1, 2 with each other. These sacrificial bridges 16 might be removed in a later finishing step of the manufacturing method according to the present invention. The one skilled in the art will encounter no particular difficulty to adapt the number and location of the sacrificial bridges to be provided, essentially as a function of the geometry and size of the monolithic structure, without going beyond the scope of the invention as defined in the appended claims. As already mentioned, the build plate used during the Additive Manufacturing operation might fulfil the function of one or several specific sacrificial bridges which might accordingly be omitted.

As previously mentioned, the provision of at least one sacrificial bridge between each pair of flexible elements might be preferred in that, for instance, it ensures that a required gap is maintained between the corresponding flexible elements until the dissipative layer in viscoelastic material is completed. Accordingly, it may be particularly advantageous to remove any sacrificial bridge only at the end of the process, after the dissipative layer is completed. However, providing the monolithic structure with specific sacrificial parts might be required for the implementation of the Additive Manufacturing operation and such sacrificial parts may as well be removed immediately after the end of step S1, before proceeding to the second step S2 of the method, while other sacrificial bridges might be removed only at a later stage.

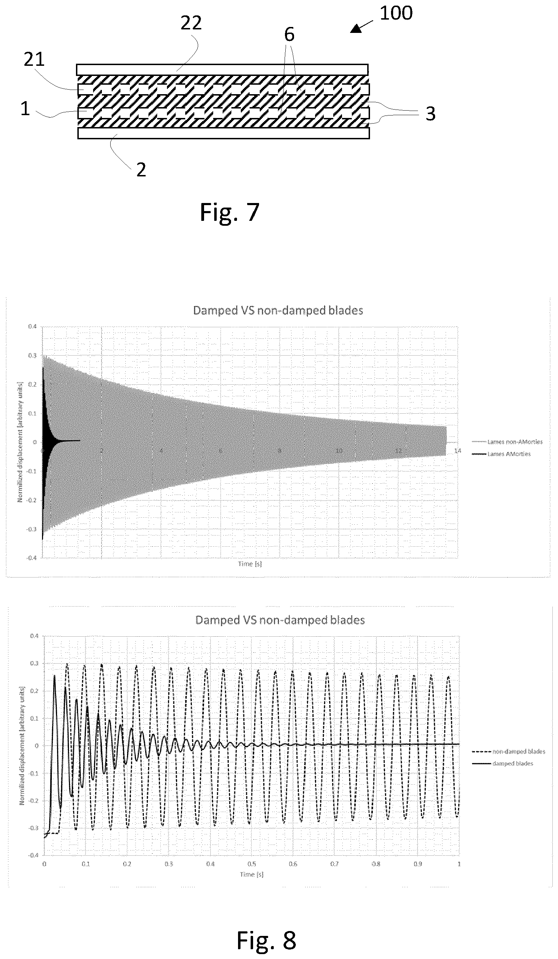

According to another embodiment represented in Fig. 7, the shock absorbing and/or vibration damping device 100 may comprise additional flexible elements 21, 22, so as to form a sandwich structure defined by two external flexible elements and at least one internal flexible element. In total, there are four flexible elements 1, 2, 21, 22 in the example of Fig. 7, but there could be only three or more than four as well. Just like the first and second flexible elements 1, 2, the additional flexible elements 21, 22, also present a sheet or blade-like geometry and extend substantially parallel to the first flexible element 1, with the region between all the flexible elements 1, 2, 21, 22 (i.e. all the free space located in between the two external flexible elements of the sandwich) being filled by a dissipative layer 3 comprising a viscoelastic material. Advantageously, at least the internal flexible elements 1, 21, of this sandwich structure are provided with an array of through-going apertures 6 which facilitate the distribution of the material conforming the dissipative layer 3 within the space between the flexible elements and provide an improved adhesion between the dissipative layer 3 and all the flexible elements.

More advantageously, all the flexible elements 1, 2, 21, 22 of the sandwich structure can be provided with an array of through-going apertures 6.

The effect of the dissipative layer 3 in the rate of energy dissipation of a device according to the invention is illustrated by the experimental data presented in Fig. 8. The measurements were performed with the exemplary device shown in Fig. 5 and described in previous paragraphs. The flexible elements 1, 2 were fabricated through a Selective Laser Sintering (SLS) process, from a CL92PH precipitation hardening steel. The dissipative layer consisted in solvent-free, rubbery-elastic, two component polyurethane.

The flexible elements 1, 2 were initially deflected from the equilibrium position and then suddenly released. The position of the weight organ 11 was monitored during the subsequent oscillations with a high-speed camera and a tracking software. A first measurement was done with the device of Fig. 5 before applying the dissipative layer 3 to the device. Then, the dissipative layer was applied, and the measurement repeated. The results are presented in Fig. 8. The first (top) plot corresponds to a measurement covering a temporal span of ca. 14 seconds, while the second (bottom) plot shows in greater details the data corresponding to the first second of the measurement. As can be seen from the graphs, in the absence of a dissipative layer, the oscillations are poorly damped, with a remaining amplitude of ca. 15% of the initial deformation subsisting 13 seconds after the release of the flexible elements. In contrast, when the dissipative layer 3 is applied to the device 100, the oscillations have practically disappeared after some 0.6 s from the release. The Q factor varies from 15 to 550, respectively for damped and undamped oscillators.

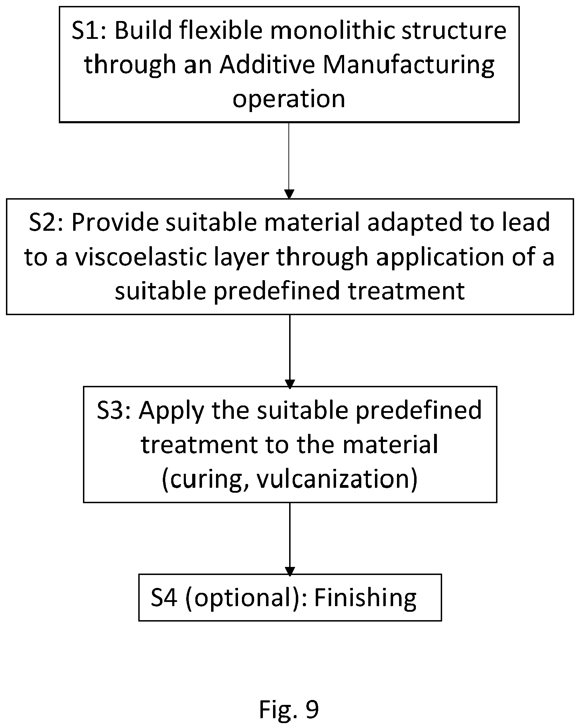

According to the present invention, the shock absorbing and/or vibration damping device is fabricated using additive manufacturing technologies, as described in the flow diagram of Fig. 9.

In a first step S1 the flexible elements 1, 2 of the shock absorbing and/or vibration damping device 100 are fabricated as a monolithic structure using an additive manufacturing process such as Laser Powder Bed Fusion (LPBF, including Binder Jetting), Electron Beam Melting (EBM), Direct Energy Deposition (DED), Fused Deposition Melting (FDM) or liquid based processes such as Stereolithography (SLA) or Polyjet. The advantage of using an additive manufacturing technology is that it enables the fabrication of structures with complex geometries such as the ones represented in Figs. 5 and 6, which are virtually impossible to fabricate by other methods. Additionally, fabricating the flexible elements 1, 2 together in a common additive manufacturing process directly guarantees a correct positioning (distance and alignment) of the flexible elements 1, 2 with respect to each other. Another advantage is that the flexible elements 1, 2, can be fabricated directly attached to a mounting organ 10, 11, fabricated through the same additive manufacturing process.

In a second step S2 of the method, a material is provided in the region between the flexible elements 1, 2, this material being preferably provided in the form of a fluid or of a powder, and being able to change of physical and/or chemical state to turn into a viscoelastic material when it is later submitted to a suitable predefined treatment. The penetration and distribution of the material is facilitated by the array of through-going apertures 6 present in at least one, preferably all, of the flexible elements 1, 2. The capillarity forces may also contribute to maintain the applied material in the region between the flexible elements 1, 2 and inside the apertures 6, when it is provided as a fluid.

The referred material may be a polymerizable material in fluid form and comprise, for example, a UV-curable polymer, a thermo-curable polymer, or a bi-composite polymer.

The fluid material can be applied with a brush, with a fluid dispenser or by dipping in a bath (under vacuum or not).

In some cases, the material may comprise a thermoplastic polymer, which becomes fluid-enough to penetrate the structure by heating it to a certain high temperature (depending on the chosen material). In this case, and advantageously when the flexible elements 1, 2 are made of a metal composition, the whole structure can be heated at said certain high temperature to facilitate the penetration of the fluid. Alternatively, the base material might be a polymer in the form of a powder which can be heated to vulcanize after it was spread between the flexible elements.

A third step S3 of the method comprises applying the suitable predefined treatment to the material to change it into a viscoelastic material and conform the dissipative layer, said treatment being for instance a curing operation. When a polymerizable material is applied in fluid form to the structure, this last step S3 may comprise, for example: applying UV radiation in the region of the dissipative layer 3 (for UV-curable polymers), applying heat in the region of the dissipative layer 3 (for thermo-curable polymers), and/or simply waiting the necessary time to complete the polymerization reaction (in the case of bi-composite polymers.

Conveniently, in the case of UV-curable polymers, the apertures 6 in the flexible elements 1, 2, facilitate the access of the UV radiation into the polymerizable fluid.

In the case of thermoplastic polymers which were fluidified at high temperature in the second step S2, the third step S3 may simply consist in allowing the temperature of the structure cool down to room temperature to recover the non-fluid viscoelastic properties of the material.

Additional optional steps S4 may be executed at the end of the procedure, such as removing excess polymer from some parts of the structure or removing sacrificial parts or bridges of the structure fabricated in the additive manufacturing process S1.

## Claims

1. Method of manufacturing a damping device, for damping vibrations and/or absorbing shocks, comprising the steps of:
S1) Implementing an Additive Manufacturing step to produce a monolithic structure comprising a first flexible element (1) essentially having a sheet or blade-like geometry and at least a second flexible element (2) essentially having a sheet or blade-like geometry and extending substantially parallel to said first flexible element (1), wherein at least said first flexible element (1) comprises at least one through-going aperture (6), preferably a plurality of through-going apertures (6),
S2) Providing a material, in the region between said first flexible element (1) and said at least second flexible element (2), which is able to change of physical and/or chemical state to turn into a viscoelastic material when it is submitted to a suitable predefined treatment, and
S3) Applying said suitable predefined treatment to said material to conform a dissipative layer (3) of viscoelastic material, extending between said first flexible element (1) and said at least second flexible element (2) and secured to both of them, wherein said through-going aperture (6) or at least one of said plurality of through-going apertures (6) is at least partially filled by said viscoelastic material.

2. Method according to claim 1, wherein said Additive Manufacturing step (S1) includes an operation consisting in providing at least one sacrificial bridge between said first flexible element (1) and said at least second flexible element (2), and wherein the method includes an additional step implemented after said step S3 and including an operation consisting in removing said at least one sacrificial bridge.

3. Method according to claim 1 or 2, wherein said Additive Manufacturing step (S1) is implemented so as to provide said at least second flexible element (2) with at least one protrusion (15) extending in the direction to said first flexible element (1).

4. Method according to any of the preceding claims, wherein said Additive Manufacturing step (S1) is implemented so as to provide said at least second flexible element (2) with at least one through-going aperture (6), preferably with a plurality of through-going apertures (6), and wherein said steps S2 and S3 are implemented in such a way that said at least one through-going aperture (6) is at least partially filled with said viscoelastic material of said dissipative layer (3).

5. Method according to any of the preceding claims, said first flexible element (1) comprising an internal surface, facing an internal surface of said at least second flexible element (2), and an external surface opposite said internal surface, wherein said steps S2 and S3 are implemented in such a way that said dissipative layer (3) extends beyond said through-going aperture (6) or at least one of said plurality of through-going apertures (6) so as to cover at least partially said external surface of said first flexible element (1).

6. Method according to any of the preceding claims, wherein said Additive Manufacturing step (S1) is implemented so as to provide said monolithic structure with at least one additional flexible layer (21, 22) having a sheet or blade-like geometry, extending substantially parallel to said first and second flexible elements (1, 2), so as to form a sandwich structure defined by two external flexible elements and at least one internal flexible element, the latter being provided with at least one through-going aperture (6), wherein the region between all the flexible elements of said monolithic structure is filled by said viscoelastic material of said dissipative layer (3), including said at least one through-going aperture (6).

7. Method according to any of the preceding claims, wherein said Additive Manufacturing step (S1) is implemented so as to provide said monolithic structure with a permanent rigid connection between first extremities of said first flexible element (1) and of said at least second flexible element (2).

8. Method according to claim 7, wherein said Additive Manufacturing step (S1) is implemented so as to provide said monolithic structure with a permanent rigid connection between the other extremities of said first flexible element (1) and of said at least second flexible element (2).

9. Method according to any of the preceding claims, wherein said viscoelastic material is a polymer, and wherein said step S3 includes a curing operation chosen from the group comprising: applying UV radiation, applying heat, or waiting the necessary time to complete a polymerization or vulcanization reaction.

10. Method according to any of the preceding claims, wherein said Additive Manufacturing step (S1) includes an operation consisting in providing said monolithic structure with a mechanical mounting organ (10, 11).

11. Method according to any of the preceding claims, wherein said step S2 is carried out on the basis of a material suitable to lead to a dissipative layer (3) which is **characterized by** a damping "tan delta" value equal or higher than 0.1.

12. Damping device (100), for damping vibrations and/or absorbing shocks, manufactured through the implementation of a manufacturing method according to any of claims 1 to 11, comprising a monolithic structure including a first flexible element (1) having essentially a sheet or blade-like geometry, at least a second flexible element (2) having essentially a sheet or blade-like geometry and extending substantially parallel to the first flexible element (1), a dissipative layer (3) comprising a viscoelastic material, extending between said flexible elements (1, 2) and secured to both of them,
**characterized in that** said first flexible element (1) comprises at least one through-going aperture (6), preferably a plurality of through-going apertures (6), and
**in that** said at least one through-going aperture (6) or at least one of said plurality of through-going apertures (6) is at least partially filled by said viscoelastic material of said dissipative layer (3).

13. The damping device (100) according to claim 12, wherein said at least second flexible element (2) comprises at least one protrusion (15) extending in the direction to said first flexible element (1).

14. The damping device (100) according to claim 13, wherein said at least one protrusion (15) extends at least partially through said at least one through-going aperture (6) or one of said plurality of through-going apertures (6).

15. The damping device (100) according to any of claims 12 to 14, wherein said monolithic structure includes a mechanical mounting organ (10, 11).

16. The damping device (100) according to any of claims 12 to 15, wherein said monolithic structure comprises at least one additional flexible layer (21, 22) having a sheet or blade-like geometry, extending substantially parallel to said first and second flexible elements (1, 2), so as to form a sandwich structure defined by two external flexible elements and at least one internal flexible element, the latter being provided with at least one through-going aperture (6), wherein the region between all the flexible elements of said monolithic structure is filled by said viscoelastic material of said dissipative layer (3), including said at least one through-going aperture (6).

17. Flexure guiding mechanism comprising a damping device (100) according to any of claims 12 to 16 arranged to fulfil a flexure guiding function.

18. Flexure guiding mechanism including a damping device, for damping vibrations and/or absorbing shocks, said damping device comprising a first flexible element (1) having essentially a sheet or blade-like geometry, at least a second flexible element (2) having essentially a sheet or blade-like geometry and extending substantially parallel to the first flexible element (1), a dissipative layer (3) comprising a viscoelastic material, extending between said flexible elements (1, 2) and secured to both of them,
**characterized in that** said first flexible element (1) comprises at least one through-going aperture (6), preferably a plurality of through-going apertures (6),
**in that** said at least one through-going aperture (6) or at least one of said plurality of through-going apertures (6) is at least partially filled by said viscoelastic material of said dissipative layer (3), and
**in that** said damping device is arranged to fulfil a flexure guiding function.
